# EUROPEAN PATENT APPLICATION

(11) **EP 4 826 529 A1**
(43) Date of publication of application: **21.10.2026**
(21) Application number: 24911147.7
(22) Date of filing: 24.12.2024
(51) Int. Cl.: G06F 9/48

(54) **METHOD FOR FUNCTION CALLING BETWEEN COMPONENTS IN COMPUTING DEVICE, APPARATUS, AND DEVICE**

(30) Priority: 28.12.2023 CN 202311853169
(71) Applicant: Huawei Technologies Co., Ltd., Shenzhen, Guangdong 518129 (CN)
(72) Inventor: SONG, Dongkuang, Shenzhen, Guangdong 518129 (CN); JIN, Shaohuang, Shenzhen, Guangdong 518129 (CN); LIU, Cuiling, Shenzhen, Guangdong 518129 (CN)
(74) Representative: Maiwald GmbH
(86) International application number: PCT/CN2024/142027
(87) International publication number: WO 2025/140222

(57) **Abstract**

Embodiments of this application disclose a method and apparatus for functional call between components in a compute device, and a device, and relate to the field of computer technologies. The method includes: receiving a call identifier of a to-be-called first functionality and an input parameter of a function of the first functionality; determining a target interaction channel corresponding to the call identifier of the first functionality; and sending a call request to a destination component through the target interaction channel, where the call request carries the call identifier of the first functionality and the input parameter of the function of the first functionality.

## Description

This application claims priority to Chinese Patent Application No. 202311853169.7, filed on December 28, 2023 and entitled "METHOD AND APPARATUS FOR FUNCTIONAL CALL BETWEEN COMPONENTS IN COMPUTE DEVICE, AND DEVICE", which is incorporated herein by reference in its entirety.

### TECHNICAL FIELD

This application relates to the field of computer technologies, and in particular, to a method and apparatus for functional call between components in a compute device, and a device.

### BACKGROUND

With the development of chip technologies, more compute units are integrated in a single chip, and each compute unit can run independent firmware. In addition to the independent firmware running on these compute units, a computing system further includes a conventional baseboard management controller (Baseboard Management Controller, BMC)/embedded controller (embedded controller, EC), device firmware, an operating system, and the like. In the computing system, the firmware, the software, and the system are all referred to as components. How to implement functional call among components has become one of the key issues in the computing system.

### SUMMARY

Embodiments of this application provide a method and apparatus for functional call between components in a compute device, and a device, to implement functional call between the components in the compute device. Corresponding technical solutions are as follows:

According to a first aspect, a method for functional call between components in a compute device is provided. The method includes:

A source component receives a call identifier of a to-be-called first functionality and an input parameter of a function of the first functionality; then, determines a target interaction channel corresponding to the call identifier of the first functionality; and further sends a call request to a destination component through the target interaction channel, where the call request carries the call identifier of the first functionality and the input parameter of the function of the first functionality.

In the technical solution provided in this application, the source component may support functional call between a plurality of interaction channels and another component. Therefore, when the source component needs to call a functionality from the destination component, an interaction channel supported by a to-be-called functionality may be found, and then the functionality is called from the destination component through the interaction channel supported by the to-be-called functionality.

In a possible implementation, the method further includes:
storing to-be-processed data into a shared storage space with the destination component, where the input parameter of the function of the first functionality includes a parameter indicating a physical address of the to-be-processed data in the shared storage space.

In the technical solution provided in this application, data exchange between the source component and the destination component may be implemented by using the shared storage space.

In a possible implementation, the call request further carries to-be-processed data.

In the technical solution provided in this application, data exchange between the source component and the destination component may be implemented via a message.

In a possible implementation, a call identifier service table may be configured for each component. Correspondingly, processing performed when the target interaction channel corresponding to the call identifier of the first functionality is determined may be as follows:
obtaining a call identifier service table of the destination component, where the call identifier service table records a correspondence between a call identifier and an interaction channel; and further, querying the call identifier service table of the destination component for the target interaction channel corresponding to the call identifier of the first functionality.

In the technical solution provided in this application, the call identifier service table may be configured for each component, and the call identifier service table corresponding to each component records the correspondence between a call identifier of each functionality that can be provided by the component and a supported interaction channel. Therefore, if a functionality that can be provided by the component changes, only the call identifier service table of the component needs to be updated, and call logic code does not need to be modified.

In a possible implementation, an identifier of a component may be configured for each component. Correspondingly, processing of obtaining the call identifier service table of the destination component may be as follows:
receiving an identifier of the destination component, and obtaining a call identifier service table corresponding to the identifier of the destination component.

In the technical solution provided in this application, an identifier of the component may be configured for each component. Therefore, when a plurality of components can provide the first functionality, a component may be specified as the destination component based on the identifier of the component, to call the first functionality.

In a possible implementation, the obtaining the call identifier service table of the destination component includes:
using all components that provide the first functionality as destination components, and obtaining the call identifier service table of the destination components.

In the technical solution provided in this application, when a plurality of components can provide the first functionality, all the components that provide the first functionality may be used as the destination component, and a call identifier service table of the components is obtained.

In a possible implementation, the obtaining the call identifier service table of the destination component includes:
selecting, as the destination component, a component from the components that provide the first functionality, and obtaining the call identifier service table of the destination component.

In the technical solution provided in this application, when a plurality of components can provide the first functionality, one component may be selected from the components that provide the first functionality and used as the destination component, and the call identifier service table of the destination component is obtained.

In a possible implementation, the call request carries an identifier of the source component, and the identifier of the source component indicates the destination component to determine call permission of the first functionality for the source component.

In the technical solution provided in this application, an identifier of a component may be used to implement setting of functional call permission. After receiving the call request, the destination component may determine, based on the identifier of the source component carried in the call request, whether the source component has permission to call the first functionality.

In a possible implementation, the method further includes:
receiving a response returned by the destination component, where the response is one's complement of the call identifier of the first functionality.

In the technical solution provided in this application, the response of the call request is configured as the one's complement of the call identifier carried in the call request. Therefore, no response needs to be designed separately, and complexity of identifier management is reduced.

According to a second aspect, an apparatus for functional call between components in a compute device is provided. The apparatus includes:
a call module, configured to receive a call identifier of a to-be-called first functionality and an input parameter of a function of the first functionality;
a determining module, configured to determine a target interaction channel corresponding to the call identifier of the first functionality; and
a sending module, configured to send a call request to a destination component through the target interaction channel, where the call request carries the call identifier of the first functionality and the input parameter of the function of the first functionality.

In a possible implementation, the apparatus further includes:
a storage module, configured to store to-be-processed data into a shared storage space with the destination component, where the input parameter of the function of the first functionality includes a parameter indicating a physical address of the to-be-processed data in the shared storage space.

In a possible implementation, the call request further carries to-be-processed data.

In a possible implementation, the determining module is configured to:
obtain a call identifier service table of the destination component, where the call identifier service table records a correspondence between a call identifier and an interaction channel; and
query the call identifier service table of the destination component for the target interaction channel corresponding to the call identifier of the first functionality.

In a possible implementation, the apparatus further includes:
a receiving module, configured to receive an identifier of the destination component.

The determining module is configured to:
obtain a call identifier service table corresponding to the identifier of the destination component.

In a possible implementation, the determining module is configured to:
use all components that provide the first functionality as destination components, and obtain the call identifier service table of the destination components.

In a possible implementation, the determining module is configured to:
select, as the destination component, a component from the components that provide the first functionality, and obtain the call identifier service table of the destination component.

In a possible implementation, the call request carries an identifier of the source component, and the identifier of the source component indicates the destination component to determine call permission of the first functionality for the source component.

In a possible implementation, the apparatus further includes:
a receiving module, configured to receive a response returned by the destination component, where the response is one's complement of the call identifier of the first functionality.

According to a third aspect, a compute device cluster is provided, and includes at least one compute device. Each compute device includes a processor and a memory. The processor in the at least one compute device is configured to execute instructions stored in the memory in the at least one compute device, so that the compute device cluster performs the method for functional call between components in a compute device in the first aspect and/or any implementation of the first aspect.

According to a fourth aspect, a computer program product including instructions is provided. When the instructions are run by a compute device, the compute device is caused to perform the method for functional call between components in a compute device in the first aspect and/or any implementation of the first aspect.

According to a fifth aspect, a computer-readable storage medium is provided, including computer program instructions. When the computer program instructions are executed by a compute device, the compute device performs the method for functional call between components in a compute device in the first aspect and/or any implementation of the first aspect.

### BRIEF DESCRIPTION OF DRAWINGS

FIG. 1 is a diagram of a component according to an embodiment of this application;
FIG. 2 is a diagram of a system architecture according to an embodiment of this application;
FIG. 3 is a flowchart of a method for functional call between components in a compute device according to an embodiment of this application;
FIG. 4 is a diagram of a format of a user identifier format according to an embodiment of this application;
FIG. 5 is a diagram of address mapping according to an embodiment of this application;
FIG. 6 is a diagram of a structure of an apparatus for functional call between components in a compute device according to an embodiment of this application; and
FIG. 7 is a diagram of a structure of a compute device according to an embodiment of this application.

### DESCRIPTION OF EMBODIMENTS

To make objectives, technical solutions, and advantages of this application clearer, the following further describes implementations of this application in detail with reference to accompanying drawings.

An embodiment of this application provides a method for functional call between components in a compute device. The method may be applied to the compute device, to implement functional call between the components in the compute device.

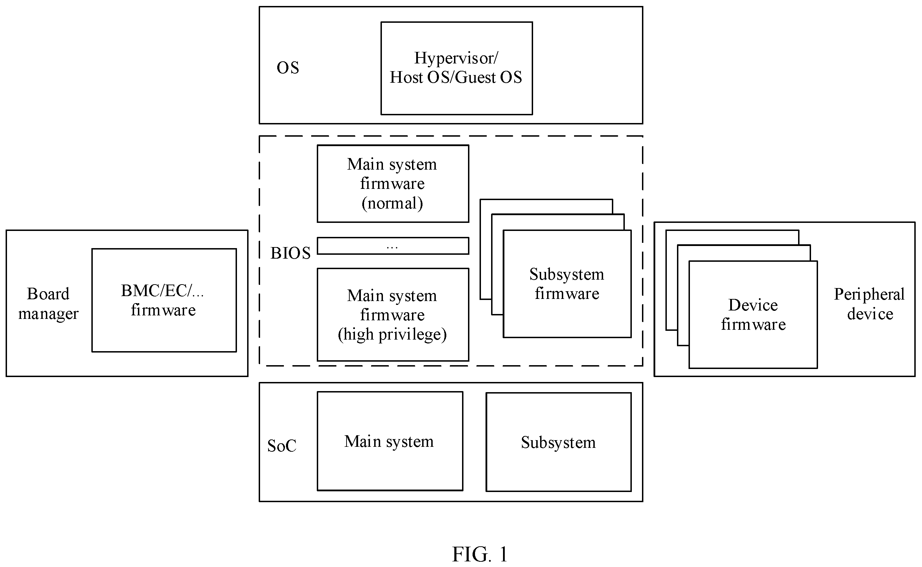

FIG. 1 shows a plurality of components in the compute device. The components are software, a system, or firmware in the compute device, and functional call exists between the components. As shown in FIG. 1, the compute device may include the following components:

A main system (Main System) is a main system used for computing in the compute device, and can run on a system on chip (System on Chip, SoC).

An operating system (Operating System, OS) is an operating system in the compute device, includes a virtual machine monitor (Hypervisor), a host system (Host OS), a guest system (Guest OS), and the like, and runs on the main system.

A subsystem (Subsystem) is a compute unit that can independently fetch and execute instructions outside the main system, is usually designed to implement specific functionalities, and can run on the system on chip (System on Chip, SoC).

Main system firmware (Main System Firmware) normal (normal) is firmware with normal privilege that runs on the main system and that is in a basic input/output system (Basic Input Output System, BIOS)

Main system firmware high privilege (high privilege) is firmware with high privilege that runs on the main system and that is in the BIOS.

Subsystem firmware (Subsystem Firmware) is firmware that runs on the subsystem and that is in the BIOS.

BMC/EC/... firmware is firmware or software running on a board management chip (Board Manager) like a BMC/EC.

Device firmware (Device Firmware) is firmware or software running on a peripheral device (Peripheral Device).

The components shown in FIG. 1 are merely a possible case. During actual implementation, there may be more or fewer components in the compute device. A quantity, a type, and the like of the components are not limited in embodiments of this application. The solution provided in embodiments of this application may implement functional call between the components shown in FIG. 1, but is not limited to functional call between the components.

During implementation of embodiments of this application, a software program may be deployed on each component that participates in functional call. The software program may be an interface (Interface) program, and the interface program may be referred to as an information interaction layer.

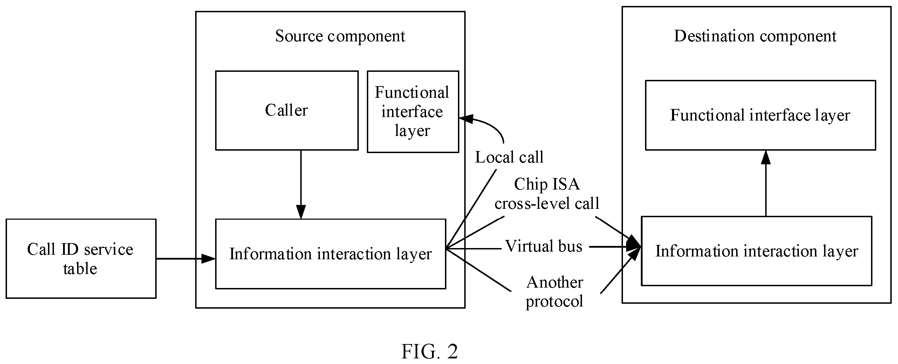

FIG. 2 shows a system architecture according to an embodiment of this application. A source component in FIG. 2 is a component that initiates call, and may include but is not limited to any component in FIG. 1. A destination component is a component that is called, and may include but is not limited to any component in FIG. 1. An information interaction layer of a caller source component in a source operating system sends a call identifier (call id) of a to-be-called functionality and an input parameter of a function of the functionality. The information interaction layer of the source component queries a call identifier service table (Call ID Service Table) of the destination component, to determine an interaction channel corresponding to the to-be-called functionality. The Call ID Service Table records correspondences between call IDs of functionalities provided by the destination component and interaction channels. Further, the information interaction layer of the source component sends a call request to an information interaction layer of the destination component through the interaction channel corresponding to the to-be-called functionality. After receiving the call request, the information interaction layer of the destination component queries the corresponding function based on the call ID carried in the call request, and sends the input parameter carried in the call request to the function, and the function performs corresponding processing. FIG. 2 shows that a functional interface layer of the source component includes at least one function of a functionality that can be provided by the source component, and a functional interface layer of the destination component includes at least one function of a functionality that can be provided by the destination component.

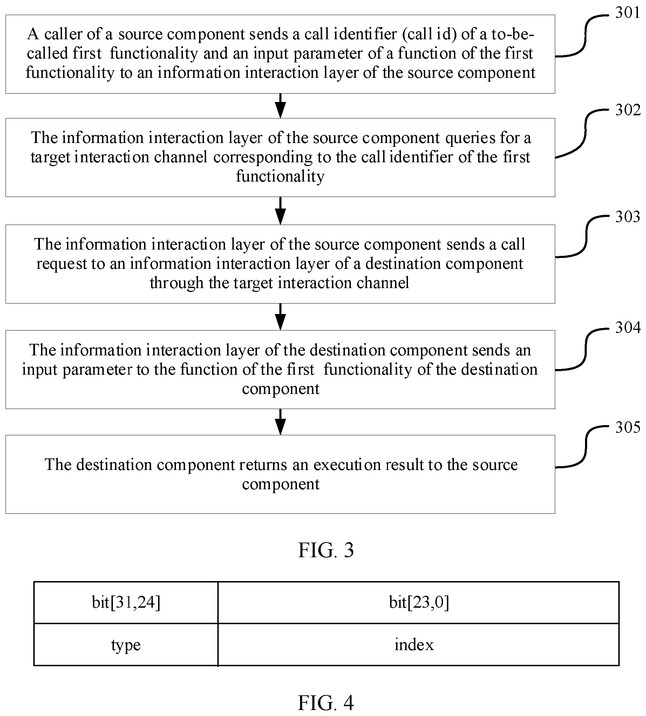

FIG. 3 is a flowchart of a method for functional call between components in a compute device according to an embodiment of this application. As shown in FIG. 3, the method may include the following processing steps.

Step 301: A caller of a source component sends a call identifier (call id) of a to-be-called first functionality and an input parameter of a function of the first functionality to an information interaction layer of the source component.

The caller may be any functional module in the source component, and the input parameter includes an input parameter (input), an input size parameter (inputSize), an output parameter (output), and an output size (outputSize). The call ID is used to identify a functionality that can be provided by the component. Each functionality corresponds to one call ID, call IDs of same functionalities provided by different components are the same, and call IDs of different functionalities are different.

During implementation, when a functional module in the source component needs to call the first functionality, the functional module serves as a caller, and sends the call identifier (call id) of the first functionality and the input parameter of the function of the first functionality to the information interaction layer of the source component through a first interface. For example, the first interface may be as follows:
int Call(unsigned int callId, const void *input, unsigned int inputSize, void *output, unsigned int *outputSize)

Step 302: The information interaction layer of the source component queries for a target interaction channel corresponding to the call identifier of the first functionality.

During implementation, step 302 may be implemented in the following several cases:

Case 1: The source component performs functional call with only one component, and the component is a destination component.

In the case 1, the information interaction layer of the source component may obtain a call identifier service table (Call ID Service Table) of the destination component. The Call ID Service Table may also be referred to as a functionality configuration table. The Call ID Service Table records a correspondence between a call identifier of each functionality, of the destination component, that can be called (or provided) and an interaction channel. A specific name of the Call ID Service Table is not limited in this application. The Call ID Service Table of the destination component may be shown in Table 1.

**Table 1**

| Call ID | Interaction channel |
|---|---|
| Call ID 1 | Interaction channel 1 |
| Call ID 2 | Interaction channel 2 |
| Call ID 3 | Interaction channel 3 |
| ... | ... |

The interaction channel may include local call, chip instruction set architecture (Instruction Set Architecture, ISA) cross-level call, virtual bus call, other protocol call, and the like.

The source component may obtain the Call ID Service Table of the destination component in a plurality of manners. The following enumerates several manners as examples.

Obtaining manner 1: The Call ID Service Table of the destination component is directly written into the source component. Correspondingly, an information interaction layer of the destination component may directly obtain the Call ID Service Table of the destination component from the source component.

Obtaining manner 2: The information interaction layer of the source component sends a request for obtaining the Call ID Service Table to the information interaction layer of the destination component, and the information interaction layer of the destination component sends the Call ID Service Table of the destination component to the information interaction layer of the source component.

Obtaining manner 3: A specified component is configured to manage a Call ID Service Table of each component. Correspondingly, the information interaction layer of the source component may send a request for obtaining the Call ID Service Table of the destination component to the specified component, and the specified component returns the Call ID Service Table of the destination component to the source component.

After the Call ID Service Table of the destination component is obtained, the Call ID Service Table of the destination component is queried. If the call ID of the first functionality is found, the target interaction channel corresponding to the call ID of the first functionality is queried for. If the call ID of the first functionality is not found, a message indicating that call is not supported is returned to the caller.

Case 2: The source component may perform functional call with a plurality of components, and one or more of the plurality of components may be the destination component.

In the case 2, there may be a plurality of implementations. The following enumerates several of the implementations as examples for description.

Implementation 1: An identifier is assigned to each component, where the identifier is unique in a computing system, and the identifier may be referred to as a user identifier (user id).

In the implementation 1, the caller may send a user ID of the destination component to the information interaction layer of the source component. Correspondingly, the information interaction layer of the source component may obtain the Call ID Service Table of the component corresponding to the user ID.

In implementation 1, the user ID may be designed by using a combination of type (type) and index (index). A format of the user ID may be shown in FIG. 4, and includes 32 bits (bit), where a bit 0 to a bit 23 denotes index, and a bit 24 to a bit 31 denotes type.

Type: It indicates a component type. It is required to ensure that each type of component is assigned a unique type. Based on computer composition analysis, the following types are included: BIOS, host OS, guest OS, BMC, peripheral component interconnect express (peripheral component interconnect express, PCIe) device Device, among others. Each newly added type shall be registered upon application.

Index: It indicates a sequence number within a specific type. The sequence number is arbitrary, provided that uniqueness within a same type is maintained. The intra-type uniqueness may be implemented in different manners for different types of components.

For components within BIOS, a user ID may be configured by BIOS developers.

For components within OS, a process ID (id) may be reused as an index of the component in this type.

For components in a PCIe device, a combination of a bus (bus) number, a device (device) number, and a functionality (function) number may be used, to ensure that an index of each component in the PCIe device is unique. If necessary, a lower bit of a segment (segment) number may be added.

Specific implementation of the user ID of the component is not limited in embodiments of this application, provided that user IDs of different components are different.

Implementation 2: All components that can provide the first functionality are used as the destination component.

In the implementation 2, the information interaction layer of the source component obtains Call ID Service Tables of all components that can provide the first functionality, and uses the components as the destination component.

Implementation 3: One component is selected from all components that can provide the first functionality and used as the destination component.

In the implementation 3, the information interaction layer of the source component obtains Call ID Service Tables including the call ID of the first functionality, and uses, as the destination component, all components corresponding to obtained Call ID Service Tables including the call ID of the first functionality.

Alternatively, in the implementation 3, the information interaction layer of the source component obtains Call ID Service Tables including the call ID of the first functionality, and uses, as the destination component, a component corresponding to a first obtained Call ID Service Table including the call ID of the first functionality.

Alternatively, in the implementation 3, the information interaction layer of the source component obtains Call ID Service Tables including the call ID of the first functionality, and randomly selects, as the destination component, at least one component from components corresponding to the obtained Call ID Service Tables including the call ID of the first functionality.

Step 303: The information interaction layer of the source component sends a call request to the information interaction layer of the destination component through the target interaction channel.

The call request carries the call identifier of the to-be-called first functionality and the input parameter of the function of the first functionality.

During implementation, the information interaction layer of the source component sends the call request to the information interaction layer of the destination component according to a protocol requirement of the target interaction channel.

Based on different interaction channels, the information interaction layer of the source component and the information interaction layer of the destination component may have different data exchange manners. For example, for interaction channels such as chip ISA cross-level call and virtual bus call, data may be exchanged via a shared storage space. For interaction channels such as an intelligent platform management interface (IPMI), data may be exchanged via a message. Specifically, to-be-processed data may also be carried in the call request, and sent to the information interaction layer of the destination component.

The shared storage space may be implemented in a plurality of cases, which are described below by using examples.

Case 1: For same storage areas in the shared storage space, logical addresses seen by the source component and the destination component are the same.

In the case 1, the caller of the source component stores the to-be-processed data into the shared storage space, where input in the input parameter of the function of the first functionality indicates a logical address of the to-be-processed data that can be seen by the source component in the shared storage space, and output indicates a logical address of an execution result that can be seen by the source component in the shared storage space.

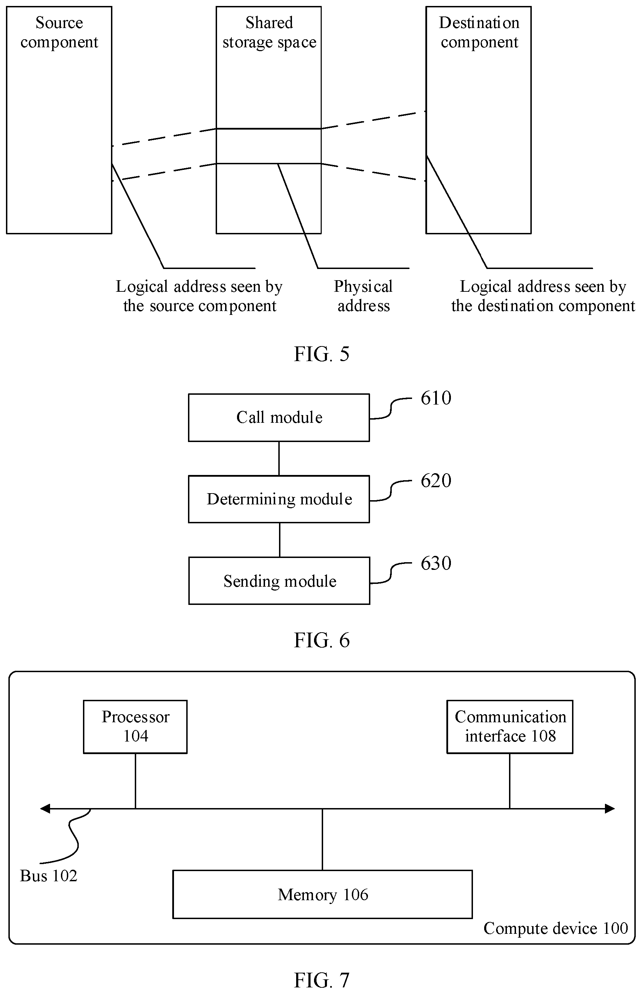

Case 2: For same storage areas in the shared storage space, logical addresses seen by the source component and the destination component are inconsistent. FIG. 5 shows a mapping relationship between the logical address seen by the component in the case 2 and a physical address of the shared storage space.

In the case 2, the caller of the source component stores the to-be-processed data into the shared storage space. The information interaction layer of the source component updates, to corresponding physical addresses based on a correspondence between a logical address of the source component and a physical address of the shared storage space, input and output in the input parameter sent by the caller, includes the call identifier of the to-be-called first functionality and the updated input parameter in the call request, and sends the call request to the information interaction layer of the destination component.

Case 3: For same storage areas in the shared storage space, logical addresses seen by the source component and the destination component are inconsistent, and different components have different access permission to the shared storage space.

In the case 3, there may be a plurality of implementations. The following enumerates several implementations as examples for description.

Implementation 1: The caller determines an accessible address range of the destination component in the shared storage space, and applies for a memory in the accessible address range to store the to-be-processed data. The information interaction layer of the source component updates, to corresponding physical addresses based on a correspondence between a logical address of the source component and a physical address of the shared storage space, input and output in the input parameter sent by the caller, includes the call identifier of the to-be-called first functionality and the updated input parameter in the call request, and sends the call request to the information interaction layer of the destination component.

Implementation 2: The caller does not consider the accessible address range of the destination component in the shared storage space, and the information interaction layer of the source component transfers the to-be-processed data into an accessible storage space of the destination component in the shared storage space; updates input in the input parameter to a physical address of the to-be-processed data in the accessible storage space; updates, to corresponding physical addresses based on the correspondence between a logical address of the source component and a physical address of the shared storage space, output in the input parameter sent by the caller; and includes the call identifier of the to-be-called first functionality and the updated input parameter in the call request, and sends the call request to the information interaction layer of the destination component.

In a possible implementation, the user ID of the source component may also be carried in the call request at the information interaction layer of the source component. Correspondingly, the information interaction layer of the destination component may query the call ID service table of the destination component, to determine whether the source component has permission to call the first functionality. In addition, to avoid forgery of the user ID, the information interaction layer of the source component may perform security review and signature on the user ID, and the information interaction layer of the destination component may perform security authentication based on a root of trust. Specifically, security processing such as security review, signature, and security authentication may be implemented in a plurality of manners. This is not limited in embodiments of this application.

Step 304: The information interaction layer of the destination component sends the input parameter to the function of the first functionality of the destination component.

During implementation, in the case 1 in which the shared storage space is used to implement data exchange in step 303, the information interaction layer of the destination component may parse the call request according to the protocol requirement of the target interaction channel, to obtain the call ID carried in the call request; query the call ID Service Table of the destination component for whether the call ID is supported; and if the call ID is supported, send, through a second interface, the input parameter carried in the call request to the function of the first functionality corresponding to the call ID carried in the call request. Herein, the information interaction layer may use the second interface to send the input parameter to each function of the component.

The second interface may be as follows:
int Function(const void *input, unsigned int inputSize, void *output, unsigned int *outputSize)

In the case 2 or the case 3 in which the shared storage space is used to implement data exchange in step 303, the destination component updates, to corresponding logical addresses based on the correspondence between a logical address of the destination component and a physical address of the shared storage space, input and output in the input parameter carried in the call request, and then sends the updated input parameter to the function of the first functionality.

In a case in which data exchange is implemented via a message in step 303, in addition to obtaining the input parameter, the information interaction layer of the destination component may further obtain the to-be-processed data by parsing the call request. Further, the information interaction layer of the destination component sends the input parameter and the to-be-processed data that are carried in the call request to the function of the first functionality of the destination component.

In a possible implementation, when the call request carries the user ID of the source component, the information interaction layer of the destination component may obtain the user ID, of the source component, carried in the call request, and query a functional call permission table of the destination component for whether the source component has permission to call the first functionality. If the source component has permission to call the first functionality, step 305 is performed. If the source component does not have permission to call the first functionality, step 305 is not performed.

The functional call permission table of the destination component may record a correspondence between a call ID of a functionality that can be provided by the destination component and a user ID of a component that has permission to call the functionality. Correspondingly, when it is determined whether the source component has permission to call the first functionality, the functional call permission table of the destination component may be queried to determine whether the user ID of the source component and the call ID of the first functionality are correspondingly recorded, and if the user ID of the source component and the call ID of the first functionality are correspondingly recorded, it is determined that the source component has permission to call the first functionality. If the user ID of the source component and the call ID of the first functionality are not correspondingly recorded, it is determined that the source component has no permission to call the first functionality.

Step 305: The destination component returns an execution result to the source component.

During implementation, in the case 1 in which the shared storage space is used to implement data exchange in step 303, a first function of the destination component stores the execution result into a storage space that corresponds to output in the input parameter and that is in the shared storage space. The information interaction layer of the destination component returns, through the target interaction channel, the input parameter carried in the call request to the information interaction layer of the source component.

In the case 2 or the case 3 in which the shared storage space is used to implement data exchange in step 303, the first function of the destination component stores the execution result into a storage space that corresponds to output in the input parameter and that is in the shared storage space. The information interaction layer of the destination component updates, to corresponding physical addresses based on the correspondence between a logical address of the destination component and a physical address of the shared storage space, input and output in the updated input parameter in step 304, and returns the updated input parameter to the information interaction layer of the source component through the target interaction channel.

In the case in which data exchange is implemented via a message in step 303, the information interaction layer of the destination component returns the input parameter and the execution result that are carried in the call request to the information interaction layer of the source component.

In addition, in the implementation 2 of the case 3 in which the shared storage space is used to implement data exchange in step 303, after receiving the input parameter returned by the information interaction layer of the destination component, the information interaction layer of the source component needs to transfer the to-be-processed data to the storage space indicated by input in the input parameter sent by the caller to the shared storage space of the source component.

In a possible implementation, after receiving the call request sent by the source component, the information interaction layer of the destination component further returns a response to the information interaction layer of the source component. In embodiments of this application, one's complement of the call ID carried in the call request may be used as the corresponding response. In this case, it needs to be ensured that the one's complement of the call ID is not the same as the call ID. For example, the call ID may be designed as follows: 32 bits are used as a length of the call ID, where highest two bits are all 1s, to ensure that the one's complement of the call ID is not the same as the call ID. In addition, no additional ID needs to be specially set for the response.

FIG. 6 is a diagram of a structure of an apparatus for functional call between components in a compute device according to an embodiment of this application. The apparatus may be an information interaction layer of a source component. As shown in FIG. 6, the apparatus includes:
a call module 610, configured to receive a call identifier of a to-be-called first functionality and an input parameter of a function of the first functionality;
a determining module 620, configured to determine a target interaction channel corresponding to the call identifier of the first functionality; and
a sending module 630, configured to send a call request to a destination component through the target interaction channel, where the call request carries the call identifier of the first functionality and the input parameter of the function of the first functionality.

In a possible implementation, the apparatus further includes:
a storage module, configured to store to-be-processed data into a shared storage space with the destination component, where the input parameter of the function of the first functionality includes a parameter indicating a physical address of the to-be-processed data in the shared storage space.

In a possible implementation, the call request further carries to-be-processed data.

In a possible implementation, the determining module 620 is configured to:
obtain a call identifier service table of the destination component, where the call identifier service table records a correspondence between a call identifier and an interaction channel; and
query the call identifier service table of the destination component for the target interaction channel corresponding to the call identifier of the first functionality.

In a possible implementation, the apparatus further includes:
a receiving module, configured to receive an identifier of the destination component.

The determining module 620 is configured to:
obtain a call identifier service table corresponding to the identifier of the destination component.

In a possible implementation, the determining module 620 is configured to:
use all components that provide the first functionality as destination components, and obtain the call identifier service table of the destination components.

In a possible implementation, the determining module 620 is configured to:
select, as the destination component, a component from the components that provide the first functionality, and obtain the call identifier service table of the destination component.

In a possible implementation, the call request carries an identifier of the source component, and the identifier of the source component indicates the destination component to determine call permission of the first functionality for the source component.

In a possible implementation, the apparatus further includes:
the receiving module, configured to receive a response returned by the destination component, where the response is one's complement of the call identifier of the first functionality.

It should be noted that, when the apparatus for functional call between components in a compute device provided in the foregoing embodiment, division into the foregoing functional modules is only used as an example for description. During actual application, the foregoing functionalities may be allocated to different functional modules for implementation based on a requirement, that is, an inner structure of the compute device is divided into different functional modules, to implement all or some of the functionalities described above. In addition, the apparatus for functional call between components in a compute device provided in the foregoing embodiment and the method embodiments for functional call between components in a compute device belong to a same concept. For specific implementation processes thereof, refer to the method embodiments. Details are not described herein again.

This application further provides a compute device 100. As shown in FIG. 7, the compute device 100 includes a bus 102, a processor 104, a memory 106, and a communication interface 108. The processor 104, the memory 106, and the communication interface 108 communicate with each other through the bus 102. The compute device 100 may be a server or a terminal device. It should be understood that a quantity of processors and a quantity of memories in the compute device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 102 may include a path for transmitting information between the components (for example, the memory 106, the processor 104, and the communication interface 108) of the compute device 100.

The processor 104 may include any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 106 may include a volatile memory (volatile memory), for example, a random access memory (random access memory, RAM). The memory 106 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement the foregoing method for functional call between components in a compute device. In other words, the memory 106 stores instructions used to perform the method for functional call between components in a compute device.

The communication interface 108 implements communication between the compute device 100 and another device or a communication network by using a transceiver module, for example, but not limited to a network interface card or a transceiver.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the method for functional call between components in a compute device.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform a method for functional call between components in a compute device.

Finally, it should be noted that the foregoing embodiments are merely intended for describing the technical solutions of this application but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the protection scope of the technical solutions of embodiments of this application.

## Claims

1. A method for functional call between components in a compute device, wherein the method is performed by a source component, and the method comprises:
receiving a call identifier of a to-be-called first functionality and an input parameter of a function of the first functionality;
determining a target interaction channel corresponding to the call identifier of the first functionality; and
sending a call request to a destination component through the target interaction channel, wherein the call request carries the call identifier of the first functionality and the input parameter of the function of the first functionality.

2. The method according to claim 1, wherein the method further comprises:
storing to-be-processed data into a shared storage space with the destination component, wherein the input parameter of the function of the first functionality comprises a parameter indicating a physical address of the to-be-processed data in the shared storage space.

3. The method according to claim 1, wherein the call request further carries to-be-processed data.

4. The method according to any one of claims 1 to 3, wherein the determining the target interaction channel corresponding to the call identifier of the first functionality comprises:
obtaining a call identifier service table of the destination component, wherein the call identifier service table records a correspondence between a call identifier and an interaction channel; and
querying the call identifier service table of the destination component for the target interaction channel corresponding to the call identifier of the first functionality.

5. The method according to claim 4, wherein the method further comprises:
receiving an identifier of the destination component; and
the obtaining the call identifier service table of the destination component comprises:
obtaining a call identifier service table corresponding to the identifier of the destination component.

6. The method according to claim 4, wherein the obtaining the call identifier service table of the destination component comprises:
using all components that provide the first functionality as destination components, and obtaining the call identifier service table of the destination components.

7. The method according to claim 4, wherein the obtaining the call identifier service table of the destination component comprises:
selecting, as the destination component, a component from the components that provide the first functionality, and obtaining the call identifier service table of the destination component.

8. The method according to any one of claims 1 to 7, wherein the call request carries an identifier of the source component, and the identifier of the source component indicates the destination component to determine call permission of the first functionality for the source component.

9. The method according to any one of claims 1 to 8, wherein the method further comprises:
receiving a response returned by the destination component, wherein the response is one's complement of the call identifier of the first functionality.

10. An apparatus for functional call between components in a compute device, wherein the apparatus comprises:
a receiving module, configured to receive a call identifier of a to-be-called first functionality and an input parameter of a function of the first functionality;
a determining module, configured to determine a target interaction channel corresponding to the call identifier of the first functionality; and
a sending module, configured to send a call request to a destination component through the target interaction channel, wherein the call request carries the call identifier of the first functionality and the input parameter of the function of the first functionality.

11. The apparatus according to claim 10, wherein the apparatus further comprises:
a storage module, configured to store to-be-processed data into a shared storage space with the destination component, wherein the input parameter of the function of the first functionality comprises a parameter indicating a physical address of the to-be-processed data in the shared storage space.

12. The apparatus according to claim 10, wherein the call request further carries to-be-processed data.

13. The apparatus according to any one of claims 10 to 12, wherein the determining module is configured to:
obtain a call identifier service table of the destination component, wherein the call identifier service table records a correspondence between a call identifier and an interaction channel; and
query the call identifier service table of the destination component for the target interaction channel corresponding to the call identifier of the first functionality.

14. The apparatus according to claim 13, wherein the apparatus further comprises:
a receiving module, configured to receive an identifier of the destination component, wherein
the determining module is configured to:
obtain a call identifier service table corresponding to the identifier of the destination component.

15. The apparatus according to claim 13, wherein the determining module is configured to:
use all components that provide the first functionality as destination components, and obtain the call identifier service table of the destination components.

16. The apparatus according to claim 13, wherein the determining module is configured to:
select, as the destination component, a component from the components that provide the first functionality, and obtain the call identifier service table of the destination component.

17. The apparatus according to any one of claims 10 to 16, wherein the call request carries an identifier of the source component, and the identifier of the source component indicates the destination component to determine call permission of the first functionality for the source component.

18. The apparatus according to any one of claims 10 to 17, wherein the apparatus further comprises:
a receiving module, configured to receive a response returned by the destination component, wherein the response is one's complement of the call identifier of the first functionality.

19. A compute device, wherein the compute device comprises a processor and a memory; and the processor in the compute device is configured to execute instructions stored in the memory in the compute device, to cause the compute device to perform the method according to any one of claims 1 to 9.

20. A computer program product comprising instructions, wherein when the instructions are run on a compute device, the compute device is caused to perform the method according to any one of claims 1 to 9.

21. A computer-readable storage medium, comprising computer program instructions, wherein when the computer program instructions are executed by a compute device, the compute device performs the method according to any one of claims 1 to 9.
